# EUROPEAN PATENT SPECIFICATION

(11) **EP 2 611 051 B1**
(45) Date of publication and mention of the grant of the patent: **04.06.2014**
(21) Application number: 11306809.2
(22) Date of filing: 29.12.2011
(51) Int. Cl.: H04H 20/18, H04N 21/462, H04N 21/439

(54) **Method for synchronizing media services**
Verfahren zur Synchronisierung von Mediendiensten
Procédé de synchronisation de services de média

(43) Date of publication of application: 03.07.2013
(73) Proprietor: Thomson Licensing, 92130 Issy-les-Moulineaux (FR)
(72) Inventor: Demoulin, Vincent, 35160 Montfort sur Meu (FR); Thudor, Franck, 35000 Rennes (FR); Oisel, Lionel, 35137 La Nouaye (FR)
(74) Representative: Rossmanith, Manfred

(56) References cited:
- US-A1- 2011 135 282
- US-B1- 6 630 963

## Description

### Field of the invention

The present invention is related to a method for synchronizing a first media service having an audio and video stream with a second media service having at least an audio stream such as for example a TV broadcast and a radio broadcast. In particular, the invention is related to a method according to claim 1.

### Background of the invention

It is very common nowadays that big sports, music cultural or political events are simultaneously broadcasted as a live event by a plurality of TV and radio program providers because such a big event potentially attracts a huge audience. In many cases the radio announcers provide the most exciting comments for sports events, such as a soccer match. A similar situation exists for some big music concerts or political debates that can be watched on TV but also followed on the radio. Imagine a user who watches a sports event on the TV, mutes the loudspeakers of the TV and turns on his radio receiver to listen to the radio broadcast related to the same sports event. In such a situation the user will notice that the radio broadcast is several seconds ahead of the TV broadcast because TV signals require a much greater amount of processing compared to the processing which is needed for radio signals.

Indeed, even if the live broadcast event was captured simultaneously by the different sources, TV and radio are not available exactly at the same time at the receiver side. This is mainly due to the transmission delay or latency that is usually higher for TV than for radio. Moreover, the different ways to deliver audio and video to the end user (e.g. satellite, cable, ADSL, DVBT) do not have the same latency. This latency can differ by several seconds from one source to another one. Having said this, it becomes obvious that different latencies do not only occur between radio and TV programs which are broadcasted in the conventional way by terrestrial or satellite transmission. Therefore, in the following the term "media service" will be used to denote a larger variety of media provided in different formats by different providers through different communication channels. In this sense media service shall include audio, video, textual broadcasts as well as multimedia files and streaming media. An audio-based media service includes a corresponding audio signal. A video-based media service has a corresponding video signal. Such kind of media services can be received with appropriate receiving devices such as set-top boxes, television sets, radios, and computers. For the present invention, however the type of the received media services is not relevant. In the following we will also use the terms "video stream" and "audio stream" to indicate the independence of a specific format. The present invention deals with the different latencies of two media services.

Referring back to the example described above, the synchronization of the available audio signal and the TV signal is required to obtain a high-quality user experience.

This problem is addressed by US 2006/0156374/A1 disclosing a method for automatically synchronizing playback between a first media service and a second media service which correspond to the same media contents. The known method suggests to adjust the time scale of playback of at least one media service so as to automatically synchronize the playback between the first media service and the second media service.

US 6630963 B1 and US 2003/0179317 A1 also disclose a method for automatically synchronizing playback between a first media service and a second media service which correspond to the same media contents.

Even though the present invention is described in the context of a TV channel and a radio broadcast that need to be synchronized to create a satisfactory user experience, it is obvious for a person skilled in the art that the invention is not limited to this kind of situation. Rather, the present invention can always be applied when an audio stream of one media service shall be replaced by the audio stream of another media service. As another specific example we can consider the situation of an international soccer match which is covered by a plurality of TV broadcasters from different countries. There may be a situation that one foreign TV broadcaster delivers the soccer match in HD (high definition) TV quality, while the TV broadcaster of the home country of the user broadcasts it only in SD (standard definition) TV quality. In such a situation the user may decide to watch on his TV set the video stream of the foreign broadcast TV as a first media service, while he listens to the audio stream of his home country TV broadcaster as the second media service. Using this approach the user can enjoy HD TV quality without being bothered with language problems. Also in such a situation there may be a need to synchronize the first media service with the second media service due to different latencies in the two different broadcast paths. Nevertheless, in most cases the invention will be applied to a video-based media service on the one hand and an audio-based media service on the other hand.

In all described situations there remains a need to provide better support for the user to facilitate the use of different media services covering the same live event.

### Summary of the invention

The invention consists in an interaction method with a person that watches a TV broadcasted live event allowing him, in a simple manner, to select and associate to the displayed video, an audio stream delivered by another source than the TV channel currently selected but dealing with the same event.

The method relies on techniques allowing to know and to decode some available audio streams that deal with the same live event as the one currently displayed on TV and to synchronize these audio streams with the reference one delivered on the TV channel.

Specifically, the invention suggests a method for synchronizing a first video and audio based media service having an audio and a video stream and one or several second media service(s) having at least an audio stream, wherein the audio stream of the first media service corresponds to the audio stream of the second media service, wherein the method comprises the following steps:
receiving the first media service;
receiving at least one second media service;
synchronizing the reproduction of the audio streams of the first and the second media service;
   and
displaying a status indicator (301, 501, 601) of the current synchronization state of the reproduction of the audio streams of the first and second media service.

In a useful embodiment the invention further comprises the step of updating the status indicator if the synchronization state changes. The change can include a change of the graphic and/or alphanumeric contents of the status indicator.

Advantageously, the method further comprises the step of selecting one of the second media services for reproduction.

Optionally, the method comprises the step of connecting a mobile device equipped with a display. The method can then be implemented and used on a second available screen like a wifi tablet or a Smartphone for example, or on the TV screen if such a second screen is not available.

Additional features can be offered to a user if the method comprises the step of searching in an electronic program guide (EPG) for second audio media services corresponding to the audio stream of the first media service. In this case the method can include the step of importing data representing the properties of the second audio media services from the electronic program guide (EPG).

Advantageously, the method further comprises the step of displaying information indicative of the properties of one of the second audio media services.

According to another advantageous embodiment the method further comprises the step of manually or automatically synchronizing the reproduction of the first and the second media service. If the first and the second media service are synchronized automatically the method can use audio fingerprints, meta data, and/or tags contained in the second audio media service for synchronization.

The possibility of a manual synchronization is offered to the viewer if automatic synchronization between the audio streams is impossible for any reason. For this purpose the method further comprises in yet another embodiment the step of displaying a graphical representation of a slider on a display and of adjusting the slider position to obtain manual synchronization of the first and second media services.

Advantageously the method can store parameters which have been determined for obtaining synchronization between the first media service and the second media service.

For a high application flexibility the method can further comprise the step of delivering the first and the second media services through Internet, cable network, satellite broadcast, terrestrial broadcast, DSL network, and WLAN network.

In practical embodiments of the invention a user interface indicates to the user the available audio sources and their respective properties (language, data rate, ...) and their synchronization status with respect to the reference TV channel.

Finally, the user can be provided with an option to choose an alternative output for the audio stream of the selected second media service.

### Brief description of the drawing

In the drawing exemplary embodiments of the present invention are illustrated. It shows:
Figure 1 the setup of the infrastructure of broadcast providers covering a sports event;
Figures 2 and 3 schematic illustrations of a handheld display device adapted for using the invention;
Figure 4 a block diagram of a synchronization apparatus; and
Figures 5 to 8 the handheld device of Figure 2 in different states.

### Detailed description of an embodiment of the invention

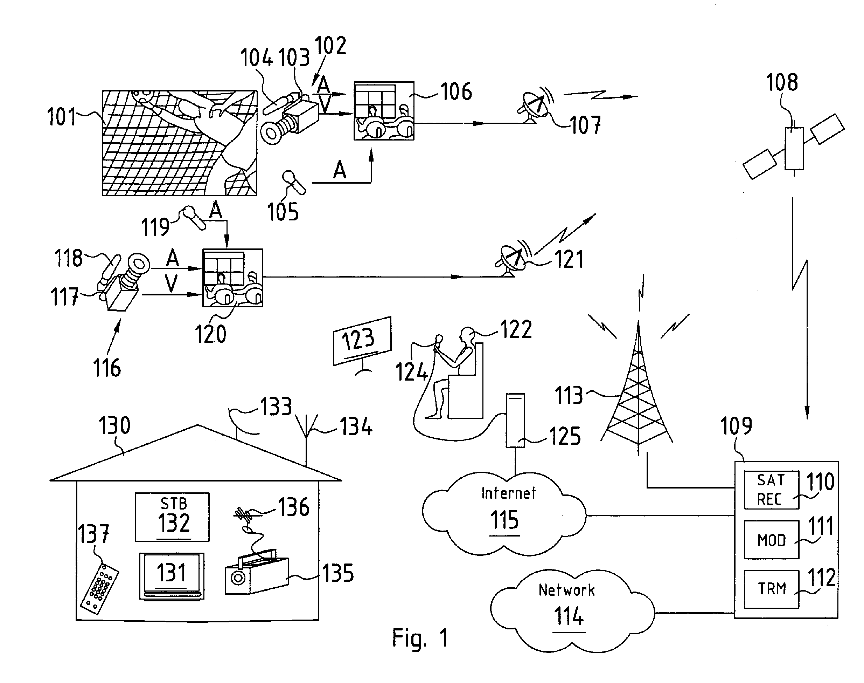

Figure 1 shows the infrastructure of several broadcast providers covering the same sports event such as a soccer match. A soccer match is a good example for the usefulness of the present invention.

In particular, Figure 1 shows in the upper left corner a goalkeeper in the soccer match in image portion 101. A TV broadcast provider covers the soccer match with a plurality of cameras 102. In Figure 1 only one camera 102 is shown as a representative of a plurality of cameras located in a soccer stadium. The camera 102 comprises an optical camera part 103 to produce video data and a microphone 104 to produce audio data. The camera microphone 104 typically catches the atmosphere in the stadium such as yells and applause of the spectators. Simultaneously, there is also a reporter of the TV broadcast provider present in the soccer stadium reporting to the TV watchers what is happening on the soccer field. The reporter is not shown in Figure 1 but only his microphone 105. The audio and video data of the camera 102 as well as the audio data of the microphone 105 are delivered to a studio room 106. In the studio room 106 technical and creative staff processes the received data from the reporter as well as the audio and video data of the plurality of cameras 102 installed in the stadium to produce an audio and video stream which is ready for being broadcasted. The stream of audio and video data is provided to a satellite uplink antenna 107 which transmits the data to the satellite 108. The satellite 108 transmits the received data stream back to earth to a base station 109, comprising a satellite receiver 110, a modulator 111 and a transmitter 112. The transmitter 112 is connected with a terrestrial broadcast antenna 113. The data stream received by the satellite receiver 110 is modulated by the modulator 111 on to a frequency which is adapted for terrestrial transmission of the data stream via the broadcast antenna 113. At the same time the base station 109 is capable of providing the received data stream also into a cable network 114 and as a video stream into the Internet 115.

Refering back to the soccer stadium, there is usually more than one broadcaster covering the live event. Therefore, figure 1 shows another camera 116 with its optical part 117 and a microphone 118. Again camera 116 is a representative of a plurality of cameras which are present in the soccer stadium. However, it is also noted that in some cases the broadcasters use the same set of cameras. Like for camera 102 the optical part 117 of the camera 116 produces video data and the microphone 118 produces audio data. Another reporter present in the stadium is symbolized by microphone 119. The audio and video data of the camera 116 and the audio data of the microphone 119 are provided to a studio room 120. In the studio room 120 technical and creative staff processes the received data to produce an audio and video stream which is ready for being broadcasted. The studio room 120 is connected with a satellite uplink antenna 121. The satellite antenna 118 transmits the audio and video signal to the satellite 108. From the satellite 108 the audio and video signal is transported in a similar way than the video and audio signal from the TV studio room 106.

It is noted that even though in figure 1 two different and separate studio rooms 106 and 120 are shown there may also be only one single studio room where the staff of different broadcasters prepare the video and audio streams for their media service provider.

Finally, figure 1 shows a professional or amateur reporter 122 in front of a TV set 123 watching the game and producing his own reportage about the game by talking into a microphone 124 which is connected with a computer 125. The computer 125 is connected to an Internet radio web site on the Internet 115. Other users can connect to the Internet radio website and listen on the Internet to the radio reportage produced by the reporter 122.

It is noted that among the plurality of broadcasters there may be also pure radio broadcasters producing only audio streams covering the live event. Obviously, the Internet radio reportage mentioned above can also serve as a second media service providing an audio stream of the live event.

The user in his home 130 has a TV 131. The TV 131 may or may not be connected with a set-top box 132. This depends on how the user receives the TV broadcast in his home. This can be accomplished by a satellite dish antenna 133 or an outdoor antenna 134 for terrestrial reception. In addition to that, the home has a connection to the cable network 114 and the Internet 115 through e.g. a cable network connection. Alternatively, the connection to the Internet 115 may be established by a DSL connection. In the home 130 the user also has an audio device 135 available, enabling him to listen to radio broadcasts. Likewise, as the TV 131, the audio device 135 can have various kinds of connections to receive the radio broadcast. In the present example the audio device 135 is capable of receiving radio programs through satellite radio, terrestrial broadcasts, the cable network 114 and/or the Internet 115. In Figure 1 an indoor antenna 136 connected to the audio device 135 is shown. The indoor antenna 136 is a representative for all other kinds of wired or wireless communications connections the audio device 135 has in different embodiments, such as Internet, cable, DSL and WLAN connections. Finally, the user has a control device 137 to control audio and video devices in his home 130.

A user initiates the execution of the method according to the present invention by selecting in a control menu of the TV 131 an option "secondary audio" by utilizing the control device 137. In an alternative embodiment the option "secondary audio" is preselected as a default option. In both cases the TV and its control software checks if the currently selected TV channel broadcast (also called reference TV channel in the following) is a live event. For this purpose the TV 131 sends a request to an electronic program guide (EPG). The electronic program guide can be a software program which is running locally on the TV 131 or on a website somewhere in the Internet if the TV is connected to the Internet. Both options are possible and are equally appropriate for executing the invention.

If the broadcasted program corresponds to a live event, the TV searches in the available EPGs if there are other broadcasts that can be accessed and which cover the same live event. While the software of the TV is searching for the other broadcasts the user has the option to initiate displaying a window on the screen of the TV showing available additional audio streams.

Today more and more users prefer to control their TV with a mobile device such as a tablet computer or a Smartphone connected to the TV providing a second screen to the user. Especially, if the mobile device is equipped with a touch screen the flexibility in controlling the TV is increased. Therefore, the invention will be described in the following in more detail in connection with a mobile device for controlling the TV 131, wherein the mobile device is equipped with a display showing on the one hand the contents of the big TV screen receiving a live event as a TV broadcast and on the other hand, more importantly, displaying the control menu providing user control options and additional information related to the secondary audio functionality.

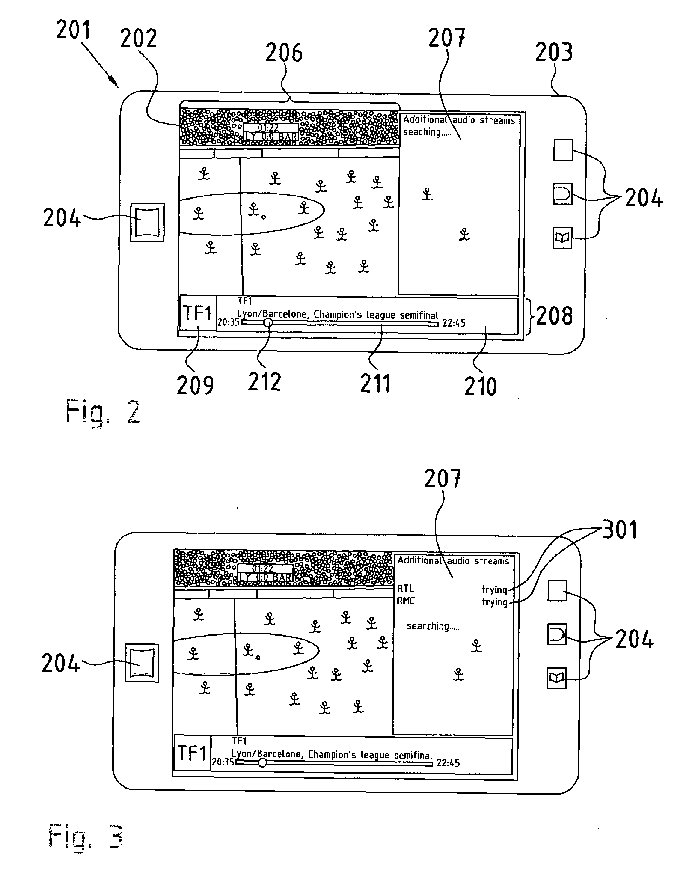

Figure 2 shows a tablet computer 201 for controlling the TV 131. The tablet computer 201 is equipped with a display 202 which is framed in a housing 203. The housing accommodates all mechanical, electric and electronic components of the tablet computer 201. On the left and the right side of the display 202 the housing 203 provides some space to allow for control buttons 204 for controlling the tablet computer 201.

As mentioned above, the display shows on its left portion 206 the contents of the screen of the TV 131. On its right portion a window 207 appears labeled with "additional audio streams". The window 207 is semitransparent such that the user can still see what is going on in the game, even in the area of the display which is covered with the window 207. This is why two soccer players are shown in the area of the window 207. The bottom area 208 is split into a left portion 209 showing the logo of the broadcast service currently received and the right portion 210 containing a time bar 211. The time bar 211 shows on its left the beginning time of the game and on its right the end time. On its top there is a title providing information about the game itself. In the course of the match a cursor 212 moves from the left end to the right end of the time bar.

In Figure 2 the window 207 is empty (except for the label "additional audio streams") and in particular does not contain yet any additional audio streams because in Figure 2 the search for secondary audio sources has just begun. Therefore, the indication "searching" is displayed in the window 207.

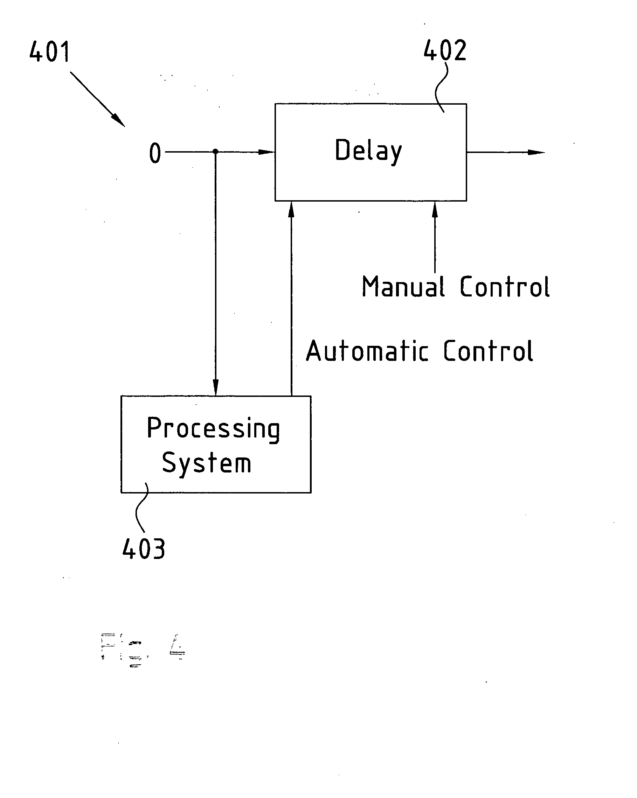

Figure 3 shows again the tablet computer 201 of Figure 2 but at a later point in time. In the situation illustrated in Figure 3 the search for additional audio streams is more advanced compared to the situation exhibited by Figure 2. As soon as an additional audio stream has been found, the list is updated. The program name of an identified additional audio stream is included in the list. In Figure 3 two audio streams are identified namely "RTL" and "RMC" which are both marked with a status indicator 301 "trying". That means an automatic synchronization process performed by a synchronization apparatus 401 (Fig. 4) is still ongoing. The user is informed about the continued search for further additional audio streams by displaying the word "searching" in window 207.

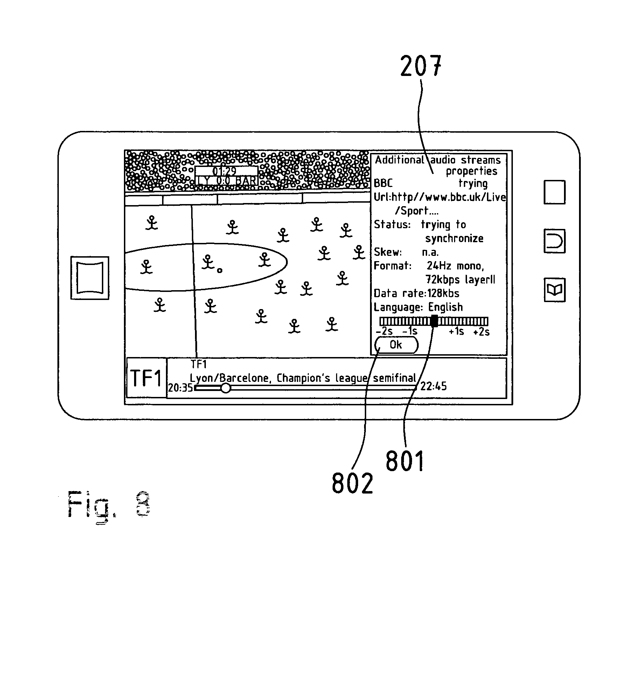

Figure 4 shows a schematic block diagram illustrating a synchronization apparatus 401 for synchronizing the TV broadcast with the secondary audio stream. The synchronization apparatus 401 includes an adjustable delay line 402 responsive to manual and/or automatic control. The manual control will be described with reference to Figure 8. Automatic control is provided by a processing system 403. The processing system uses first of all meta data and/or tags contained in the audio streams of the first and second media service. In the absence of such additional information the processing system tries to match characteristic audible events in the two audio streams to synchronize them. The adjustable delay line 402 is inserted into the audio signal processing path for the secondary audio source (not shown in Figure 4). The delay line 402 is capable of inserting delays from 0 to 2 seconds. In other embodiments other delay lines providing for delays shorter or longer than 2 seconds duration can be inserted.

In most cases it is sufficient if the synchronization apparatus 401 is present in the audio signal processing path because as mentioned above the transmission of the audio signal usually has a smaller latency than the transmission of the video signal of the TV channel. Nevertheless, in a specific embodiment of the present invention the synchronization apparatus 401 is also provided in the video signal processing path. The latter embodiment offers an additional feature enabling to advance the audio signal by delaying the video signal.

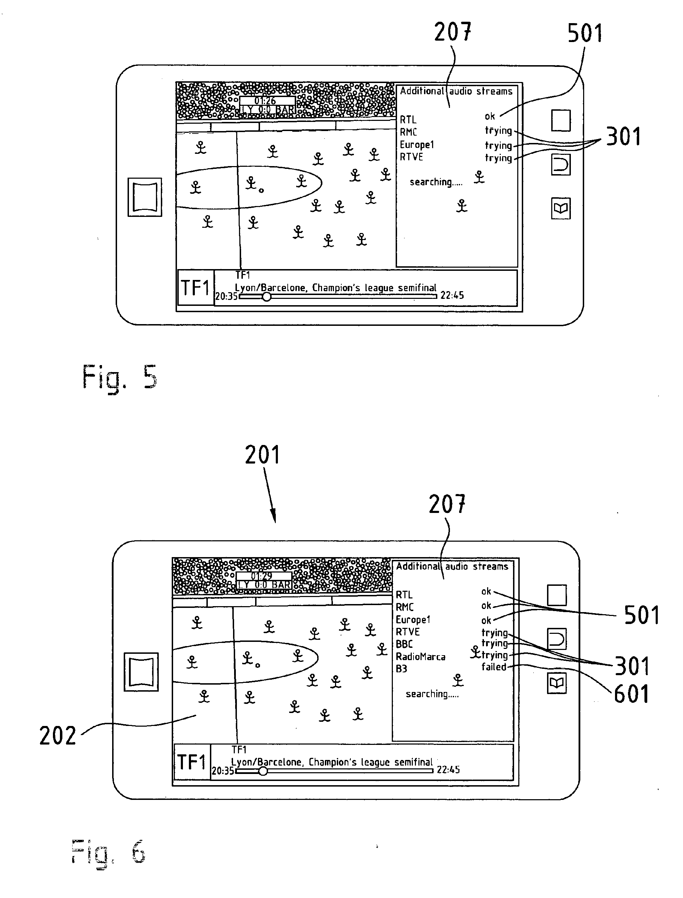

As soon as a listed audio stream is fully synchronized it is marked with a distinctive graphical status indicator 501 "ok" as it is shown in Figure 5. Window 207 displays in total 4 additional audio streams. In the first line of "RTL" has the status indicator "ok". In order to enhance the ergonomic experience for the user the display indicator "ok" is displayed in green color in the window 207. In this way the user can recognize very easily additional audio streams which are already synchronized. The user does not have to read any alphanumeric contents in window 207 to capture the information. During the synchronization process the search for additional audio streams continues.

Figure 6 shows the tablet computer 201 again at a later point in time than in Figure 5. During the continued search for additional audio streams some more were found and are shown in the list in window 207. In total three additional audio streams shown on the top of the list could be synchronized successfully and are labeled with the status indicator 501 "ok". For another three additional audio streams the synchronization process continues and the following three additional audio streams are labeled with the status indicator 301 "trying". The status indicator "trying "is displayed in gray to make it easily distinguishable from the green status indicator "ok". If the synchronization process for an additional audio stream is not successful, this specific audio stream is marked with the status indicator 601 "failed". The status indicator 601 "failed" is shown on the display 202 in red color. Consequently, the three different synchronization states are presented with three different status indicators having three different colors, namely green, gray, and red. As a result the user can very quickly recognize the contents presented to him in window 207. Under difficult light conditions this helps the user to control the TV without any errors and unintended manipulations. This is a clear advantage for supporting a high-quality user experience.

A user can select with the control device 137 of the TV set 131 or on the second screen an additional audio stream. To select a specific audio stream the user simply touches on the name of the audio stream on the display 202. Alternatively, if no second screen is available the user can use the remote control of the TV set 131 and move a cursor up and down with the cursor buttons onto the name of a desired second media service and select it by pushing an okay button of the control device 137. At this moment the additional audio stream is already played back to the user.

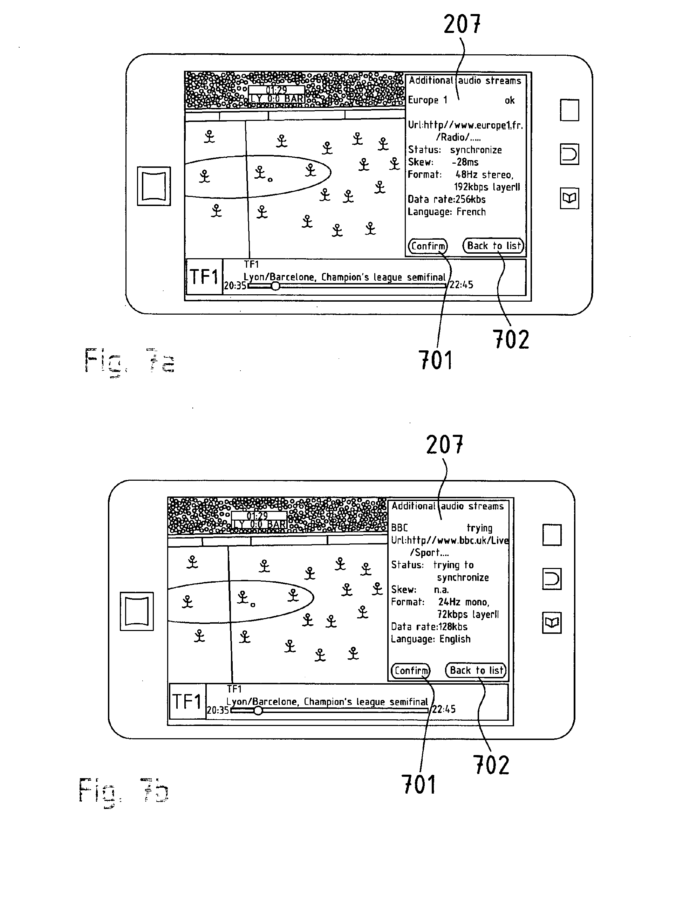

In one embodiment of the present invention the user can only select an additional audio stream which has been synchronized with the reference TV channel. Figure 7a shows the control menu in window 207 after the user has selected an additional audio stream. In the window 207 the associated properties of the selected additional audio stream like language, source name, and other properties are displayed. These properties are imported from the EPG where the audio stream was found or from the audio source itself.

In order to replace the audio's treating of the reference TV channel the user activates the "confirm" button 701 in window 207. However, the user can decide at this stage to output the additional audio stream on an auxiliary audio output, for instance personal headphones. The user can enter such a command by means of one of the control buttons 204. If the user subsequently activates the "confirm" button 701 after having selected an auxiliary audio output, the audio stream of the reference TV channel is not replaced. Consequently, there are two different audio streams available. In the described situation two users watch the same video stream on the reference TV channel on the TV set 131. One of the users listens to the audio stream of the reference TV channel which is reproduced by the loudspeakers of the TV set 131. The other user listens to the additional audio stream reproduced by the headphones connected to the TV 131.

Finally, it is noted that the user can quit this election process by activating the "back to list" button 702.

In an alternative embodiment of the present invention the user may also select additional audio streams which have the status indicator "trying" or "failed". If the selected audio stream is not fully synchronized as the one displayed on Figure 7b, the user can still continue the selection process by activating the "confirm" button 701. Then a manual synchronization method is offered to the user by displaying a dedicated graphical user interface, as it is illustrated in Figure 8.

In Figure 8 window 207 shows a slider 801 illustrating a delay between the reference TV channel and the selected additional audio stream. The slider 801 provides for a delay time range beginning at -2 seconds up to +2 seconds. The negative delay has to be understood in the present context that the audio signal is advanced compared to the TV signal. In practical implementation advancing the audio signal is achieved by delaying the TV signal with regard to the audio signal as it has been explained with reference to Figure 4. The slider 801 can be shifted by the user with a pointer or a finger or with cursor buttons on a conventional remote control. As it has already been mentioned in connection with figure 7a, the additional audio stream is already played back when the user selects an additional audio stream from the list. The user watches the screen and listens to the reproduction of the audio signal while at the same time he can shift the slider 801 to the left or to the right in Figure 8 until he achieves a satisfactory synchronization between the video and the audio stream.

When the user is satisfied by the synchronization between audio and video, he validates the audio adjustment by clicking an OK button 802. Simultaneously, the specific adjustment parameters for the synchronization apparatus 401 are stored in a nonvolatile memory to speed up the next automatic synchronization process between the TV channel currently selected and a secondary audio source.

The method for synchronizing two media services according to the present invention makes it intuitive and easy for a TV viewer to replace the audio stream delivered on the TV channel he is watching by another one available on another channel but dealing with the same live event.

List of reference numbers:
101 image portion
102 camera
103 optical camera part
104 microphone of camera
105 microphone for reporter
106 studio room
107 up link antenna
108 satellite
109 base station
110 satellite receiver
111 modulator
112 transmitter
113 broadcast antenna
114 cable network
115 Internet
116 camera
117 optical part of camera
118 microphone of camera
119 microphone for reporter
120 studio room
121 uplink antenna
122 reporter
123 TV screen
124 microphone
125 computer
130 home
131 TV
132 set top box
133 satellite dish antenna
134 outdoor antenna
135 audio device
136 indoor antenna
137 control device
201 tablet computer
202 display
203 housing
204 control buttons
206 left portion of the display 202
207 window
208 bottom area
209 left portion of bottom area
210 right portion
211 time bar
212 cursor
301 status indicator "trying"
401 synchronization apparatus
402 delays line
403 processing system
501 status indicator "ok"
601 status indicator "failed"
701 "confirm"
702 "back to list"
801 slider
802 okay button

## Claims

1. Method for synchronizing a first video and audio based media service having an audio and a video stream and one or several second media service(s) having at least an audio stream, wherein the audio stream of the first media service corresponds to the audio stream of second media service, wherein the method comprises the following steps:
receiving the first media service;
receiving at least one second media service;
synchronizing the reproduction of the audio streams of the first and the second media service; and
displaying a status indicator (301, 501, 601) of the current synchronization state of the reproduction of the audio streams of the first and second media service.

2. Method according to claim 1, further comprising the step of
updating the status indicator (301, 501, 601) if the synchronization state changes.

3. Method according to claim 1, further comprising the step of selecting one of the second media services for reproduction.

4. Method according to claim 1, further comprising the step of connecting a mobile device (201) equipped with a display (202) to a television receiver (131).

5. Method according to claim 1, wherein the method comprises the step of searching in an electronic program guide (EPG) for second media services corresponding to the audio stream of the first media service.

6. Method according to claim 5, wherein the method further comprises the step of importing data representing the properties of the second media services from the electronic program guide (EPG).

7. Method according to claim 6, wherein the method further comprises the step of displaying information indicative of the properties of one of the second media services.

8. Method according to claim 1, wherein the method further comprises the step of manually synchronizing the reproduction of the first and the second media service.

9. Method according to claim 1, wherein the method further comprises the step of automatically synchronizing the reproduction of the first and second media service.

10. Method according to claim 9, wherein the method further comprises the step of using audio fingerprints, meta data, and/or tags contained in the second media service for automatic synchronization.

11. Method according to claim 8, wherein the method further comprises the step of displaying a graphical representation of a slider (801) on a display; and
adjusting the slider (801) position to obtain manual synchronization of the first and second media services.

12. Method according to claims 9 to 11, wherein the method further comprises the step of storing parameters which have been determined for obtaining synchronization between the first media service and the second media service.

13. Method according to claim 1, wherein the method further comprises the step of delivering the first and the second media services through Internet (115), cable network (114), satellite broadcast, terrestrial broadcast, DSL network, and WLAN network.

14. Method according to claim 1, wherein the method further comprises the step of choosing an alternative output for the reproduction of the second media service.

## Patentansprüche

1. Verfahren zur Synchronisierung eines ersten video- und audiobasierten Medienservices, der einen Audio- und einen Videostream umfasst, mit einem oder mehreren zweiten Medienservices, die wenigstens einen Audiostream umfassen, wobei der Audiostream des ersten Medienservices dem Audiostream des zweiten Medienservices entspricht, wobei das Verfahren die folgenden Schritte umfasst:
Empfangen des ersten Medienservices;
Empfangen von wenigstens einem zweiten Medienservice;
Synchronisieren der Wiedergabe des Audiostreams des ersten und des zweiten Medienservices; und
Anzeigen einer Statusanzeige (301, 501, 601) des aktuellen Synchronisationszustandes der Wiedergabe der Audiostreams des ersten und des zweiten Medienservices.

2. Verfahren nach Anspruch 1, welches weiterhin den Schritt umfasst, die Statusanzeige (301, 501, 601) zu aktualisieren, wenn sich der Synchronisationszustand ändert.

3. Verfahren nach Anspruch 1, welches weiterhin den Schritt umfasst, einen der zweiten Medienservices zur Wiedergabe auszuwählen.

4. Verfahren nach Anspruch 1, welches weiterhin den Schritt umfasst, ein mobiles Gerät (201), das mit einer Anzeige (202) ausgerüstet ist, mit einem Fernsehempfänger (131) zu verbinden.

5. Verfahren nach Anspruch 1, wobei das Verfahren den Schritt umfasst, in einem elektronischen Programmführer (EPG) nach zweiten Medienservices zu suchen, die dem Audiostream des ersten Medienservices entsprechen.

6. Verfahren nach Anspruch 5, wobei das Verfahren weiterhin den Schritt umfasst, aus dem elektronischen Programmführer (EPG) Daten zu importieren, welche die Eigenschaften des zweiten Medienservices repräsentieren.

7. Verfahren nach Anspruch 6, wobei das Verfahren weiterhin den Schritt umfasst, Informationen anzuzeigen, welche auf die Eigenschaften von einem der zweiten Medienservices hinweisen.

8. Verfahren nach Anspruch 1, wobei das Verfahren weiterhin den Schritt umfasst, die Wiedergabe des ersten und des zweiten Medienservices manuell zu synchronisieren.

9. Verfahren nach Anspruch 1, wobei das Verfahren weiterhin den Schritt umfasst, die Wiedergabe des ersten und des zweiten Medienservices automatisch zu synchronisieren.

10. Verfahren nach Anspruch 9, wobei das Verfahren weiterhin den Schritt umfasst, für die automatische Synchronisation Audiofingerabdrücke, Metadaten und/oder Markierungen, die in dem zweiten Medienservice enthalten sind, zu benutzen.

11. Verfahren nach Anspruch 8, wobei das Verfahren weiterhin den Schritt umfasst, eine grafische Darstellung eines Schiebers (801) auf einer Anzeige darzustellen; und die Position des Schiebers (801) einzustellen, um eine manuelle Synchronisation des ersten und des zweiten Medienservices zu erzielen.

12. Verfahren nach den Ansprüchen 9 bis 11, wobei das Verfahren weiterhin den Schritt umfasst, Parameter abzuspeichern, welche zur Erzielung der Synchronisation zwischen dem ersten Medienservice und dem zweiten Medienservice bestimmt wurden.

13. Verfahren nach Anspruch 1, wobei das Verfahren weiterhin den Schritt umfasst, den ersten und den zweiten Medienservice über Internet (115), ein Kabelnetzwerk (114), Satellitenausstrahlung, terrestrische Ausstrahlung, ein DSL Netzwerk und ein WLAN Netzwerk zu liefern.

14. Verfahren nach Anspruch 1, wobei das Verfahren weiterhin den Schritt umfasst, eine alternative Ausgabe für die Wiedergabe des zweiten Medienservices zu wählen.

## Revendications

1. Procédé de synchronisation d'un premier service média, basé sur la vidéo et l'audio et comprenant un flux audio et un flux vidéo, sur un ou plusieurs deuxièmes services média comprenant au moins un flux audio, le flux audio du premier service média correspondant au flux audio du deuxième service média, le procédé comprenant les étapes suivantes :
réception du premier service média ;
réception d'au moins un deuxième service média ;
synchronisation de la reproduction des flux audio des premier et deuxième services média ; et
affichage d'un indicateur de statut (301, 501, 601) informant sur l'état de synchronisation actuel de la reproduction des flux audio des premier et deuxième services média.

2. Procédé selon la revendication 1, comprenant en outre l'étape consistant à mettre à jour l'indicateur de statut (301, 501, 601) lorsque l'état de synchronisation se modifie.

3. Procédé selon la revendication 1, comprenant en outre l'étape consistant à sélectionner l'un des deuxièmes services média aux fins de la reproduction.

4. Procédé selon la revendication 1, comprenant en outre l'étape consistant à connecter à un récepteur de télévision (131) un appareil mobile (201) qui est équipé d'un affichage (202).

5. Procédé selon la revendication 1, le procédé comprenant en outre l'étape consistant à chercher, dans un guide de programmes électronique (EPG), des deuxièmes services média qui correspondent au flux audio du premier service média.

6. Procédé selon la revendication 5, le procédé comprenant en outre l'étape consistant à importer du guide de programmes électronique (EPG) des données qui représentant les caractéristiques du deuxième service média.

7. Procédé selon la revendication 6, le procédé comprenant en outre l'étape consistant à afficher des informations qui indiquent les caractéristiques de l'un des deuxièmes services média.

8. Procédé selon la revendication 1, le procédé comprenant en outre l'étape consistant à synchroniser manuellement la reproduction des premier et deuxième services média.

9. Procédé selon la revendication 1, le procédé comprenant en outre l'étape consistant à synchroniser automatiquement la reproduction des premier et deuxième services média.

10. Procédé selon la revendication 9, le procédé comprenant en outre l'étape consistant à utiliser, pour la synchronisation automatique, des empreintes digitales audio, des métadonnées et/ou des marquages qui sont contenus dans le deuxième service média.

11. Procédé selon la revendication 8, le procédé comprenant en outre l'étape consistant à présenter sur un affichage une représentation graphique d'un coulisseau (801); et
à régler la position du coulisseau (801) de manière à obtenir une synchronisation manuelle des premier et deuxième services média.

12. Procédé selon les revendications 9 à 11, le procédé comprenant en outre l'étape consistant à sauvegarder des paramètres qui ont été déterminés pour obtenir la synchronisation entre le premier service média et le deuxième service média.

13. Procédé selon la revendication 1, le procédé comprenant en outre l'étape consistant à fournir les premier et deuxième services média via l'internet (115), un réseau de câbles (114), une diffusion par satellite, une diffusion terrestre, un réseau DSL et un réseau WLAN.

14. Procédé selon la revendication 1, le procédé comprenant en outre l'étape consistant à choisir une sortie alternative pour la reproduction du deuxième service média.
